# FASCICULE DE BREVET EUROPEEN

(11) **EP 0 694 912 B1**
(45) Date de publication et mention de la délivrance du brevet: **16.05.2001**
(21) Numéro de dépôt: 95401527.7
(22) Date de dépôt: 27.06.1995
(51) Int. Cl.: G11B 5/48, G11B 5/49, G11B 5/008

(54) **Circuits magnétiques pour ensemble de têtes magnétiques d'enregistrement/lecture**
Magnetkreise für Aufzeichnungs-/Wiedergabemagnetkopfanordnung
Magnetic circuits for recording/reproducing magnetic head arrangement

(30) Priorité: 01.07.1994 FR 9408161
(43) Date de publication de la demande: 31.01.1996
(73) Titulaire: THOMSON multimedia, 92648 Boulogne Cédex (FR); THOMSON-CSF, 75008 Paris (FR)
(72) Inventeur: Maurice, François, F-92402 Courbevoie Cedex (FR); Coutellier, Jean-Marc, F-92402 Courbevoie Cedex (FR)
(74) Mandataire: Albert, Claude

(56) Documents cités:
- EP-A- 0 340 085
- DE-A- 3 842 079
- GB-A- 1 478 340
- GB-A- 1 585 268
- US-A- 3 158 846
- US-A- 4 101 947
- IBM TECHNICAL DISCLOSURE BULLETIN, vol. 28, no. 2, Juillet 1985 ARMONK, N. Y., US, page 558 'Variable Track Density Magnetic Head'
- PATENT ABSTRACTS OF JAPAN vol. 7 no. 10 (P-168) ,14 Janvier 1983 & JP-A-57 167118 (SONY K. K.) 14 Octobre 1982,
- IBM TECHNICAL DISCLOSURE BULLETIN, vol. 15, no. 6, Novembre 1972 ARMONK, N. Y., US, page 1886 'Multitrack Transducer With Track Selectivity'
- PATENT ABSTRACTS OF JAPAN vol. 16 no. 514 (P-1442) ,22 Octobre 1992 & JP-A-04 188415 (CANON ELECTRON INC) 7 Juillet 1992,

## Description

L'invention concerne des circuits magnétiques pour ensemble de têtes magnétiques d'enregistrement/lecture applicables notamment aux systèmes d'enregistrement/lecture sur supports multipistes tels que les bandes, les disques, les cartes magnétiques. En ce qui concerne les bandes et disques elle est applicable aux enregistreurs de type professionnel pour la télévision, l'informatique ou les enregistreurs spéciaux ainsi que du type grand public.

Les systèmes d'enregistrement considérés sont caractérisés par des pistes portant l'information magnétique parallèlement au sens de défilement du support magnétique. Ceci est en général tout simplement obtenu grâce à l'utilisation de têtes multipistes immobiles mises au contact avec le support magnétique mobile.

Ces têtes sont conçues pour écrire un certain nombre de pistes parallèles (quelques dizaines dans la technique actuelle voire quelques centaines).

Le but de l'invention est de pouvoir générer des pistes en nombre et en largeurs variables tout en utilisant un composant unique.

L'invention concerne les systèmes utilisant les têtes d'écriture matricielle telles que décrites dans la Demande de Brevet FR-A-2 630 853, correspondant à EP-A-0 340 085 et qui reflète le préambule de la revendication 1.

La figure 1 schématise un tel système, montrant une tête d'écriture selon la Demande de Brevet précitée, associée à une tête de lecture magnétooptique selon la Demande de Brevet FR-A-2 656 723.

La figure 2 montre que la tête d'écriture est composée de plusieurs lignes d'entrefers d'écriture. C'est grâce à cela que l'on peut être en mesure d'écrire des pistes étroites et adjacentes.

On pourrait penser réaliser l'écriture de pistes plus larges par juxtaposition de pistes étroites au contenu identique. Ceci n'est malheureusement pas possible car les bits de pistes adjacentes sont écrits à des moments différents, et la précision du transport de bande est insuffisante pour les aligner parfaitement, (les bits ont une longueur inférieure au micromètre).

La demande de brevet DE-A-3842079 et l'article IBM Technical Disclosure Bulletin, « Variable track density Magnetic head », vol. 28, n°2, July 1985, page 558, décrivent des dispositifs d'enregistrement magnétiques comportant des têtes présentant des largeurs différentes. Cependant, ces documents ne permettent pas d'adapter à des têtes matricielles ce principe de têtes de longueurs différentes.

L'invention permet de résoudre ce problème.

C'est pourquoi l'invention concerne un agencement de têtes magnétiques d'enregistrement/lecture comprenant plusieurs paires de pôles disposées sous forme d'un réseau matriciel en lignes et colonnes, les entrefers étant alignés selon les colonnes, les pôles d'une même paire étant séparés par un entrefer d'enregistrement, caractérisé en ce que les longueurs des entrefers sont différentes selon les paires de pôles, chaque colonne comportant un ensemble d'entrefers de même longueur.

De plus, l'invention concerne un agencement de têtes magnétiques, caractérisé en ce que pour l'enregistrement d'informations sur un support d'enregistrement défilant devant les têtes magnétiques, des premiers entrefers ont une première longueur telle qu'ils permettent d'enregistrer sur une largeur du support et que des deuxièmes entrefers ont une deuxième longueur inférieure à la première longueur et sont situés par rapport aux premiers entrefers de façon à enregistrer dans ladite largeur du support en superposition aux premiers entrefers.

Plus précisément, l'invention a pour objet un agencement de têtes magnétiques, caractérisé en ce que pour l'enregistrement/lecture de N pistes élémentaires de largeur b
- N/2 entrefers ont leur longueur égale à b x (2/2)
- N/4 entrefers ont leur longueur égale à b x (4/2)
- N/8 entrefers ont leur longueur égale à b x (8/2)
- ...
- N/N entrefer a sa longueur égale à b x (N/2)
- 1 entrefer a sa longueur égale b x N

Les différents objets et caractéristiques de l'invention apparaîtront plus clairement dans la description qui va suivre faite à titre d'exemple et dans les figures annexées qui représentent :

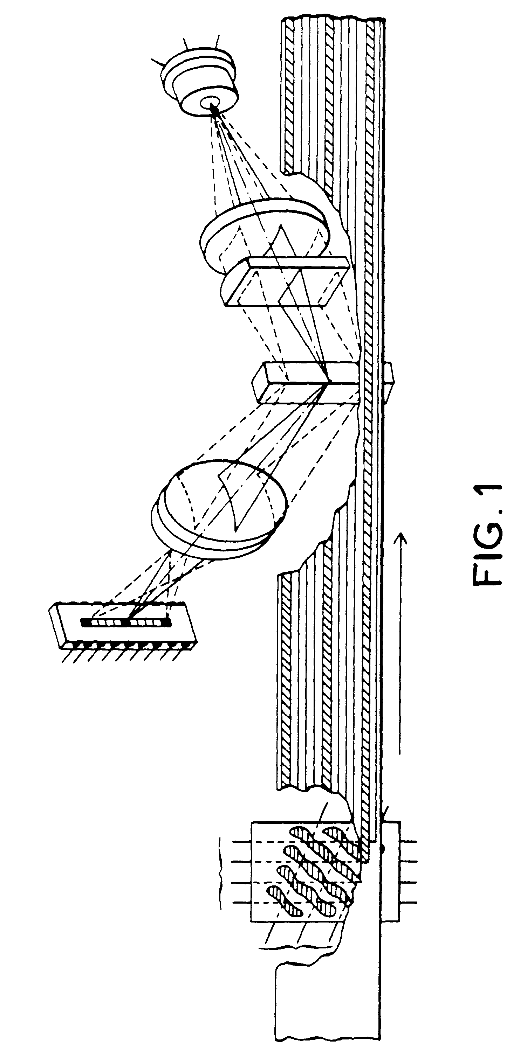

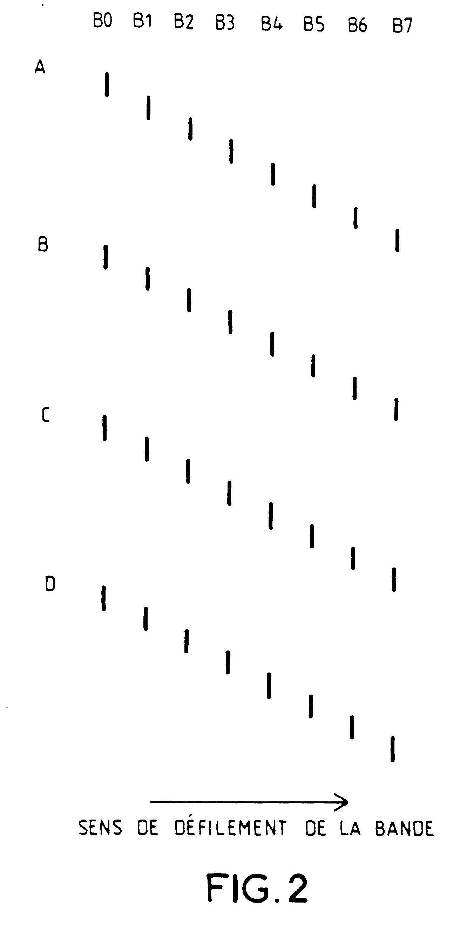

- les figures 1 et 2, un système d'enregistrement/lecture connu dans la technique et décrit précédemment ;

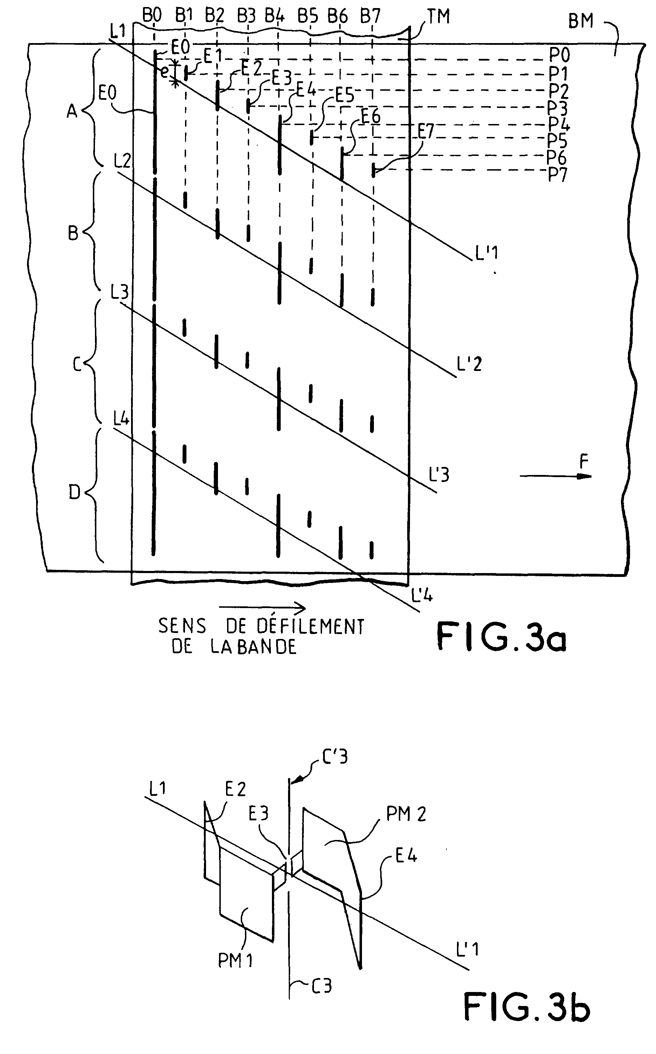

- les figures 3a et 3b, un exemple d'agencement de têtes magnétiques selon l'invention ;

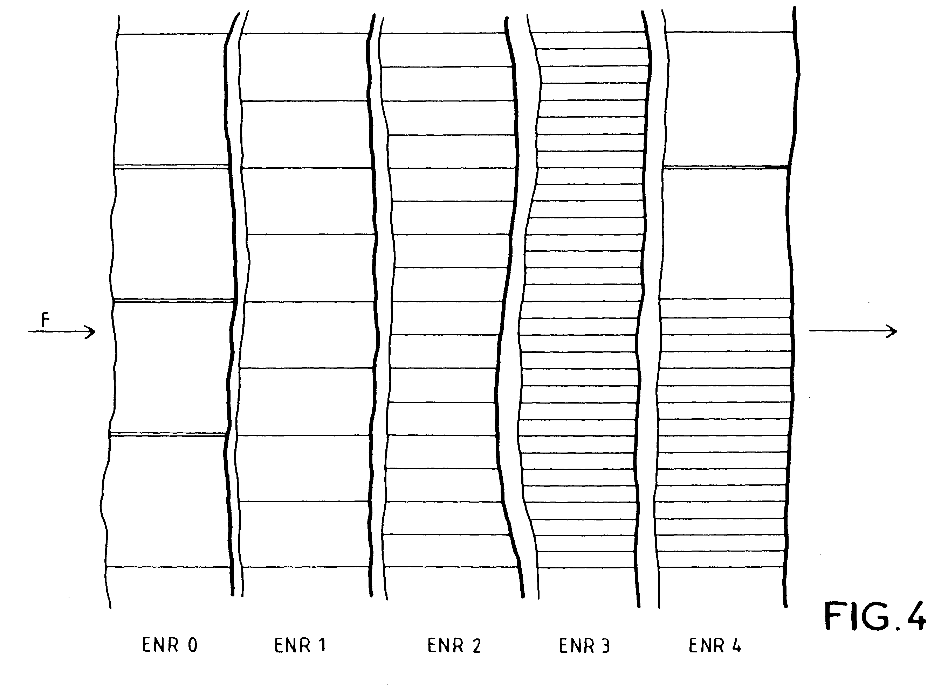

- la figure 4, différents types de largeurs de pistes pouvant être enregistrées et lues avec un agencement de têtes magnétiques telles que celui de la figure 3 ;

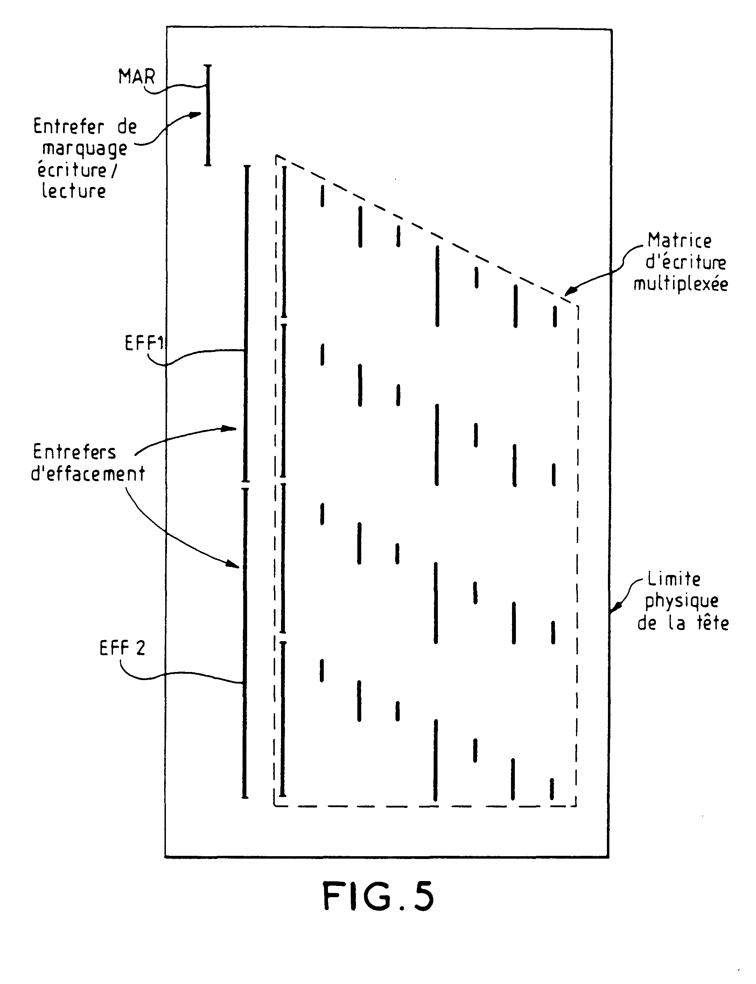

- la figure 5, une variante de réalisation d'un agencement de têtes magnétiques selon l'invention.

En se reportant aux figures 3a et 3b, on va donc décrire un exemple de réalisation de l'agencement de têtes magnétiques selon l'invention. La figure 3a représente une vue schématique de l'ensemble des entrefers d'un agencement de têtes magnétiques.

Le principe de base est le suivant :
- des entrefers de largeurs variables coexistent dans le même ensemble ;
- chaque tête a une bonne capacité de sur-écriture (overwrite).

L'ensemble de têtes magnétiques TM est disposé contre un support magnétique (bande magnétique BM) à lire ou à inscrire. La bande BM se déplace devant les têtes magnétiques selon la direction F.

Les entrefers E0, E1, E2, E3, ... E7 sont dans des plans B0, B1, B2, B3, ... B7 transverses par rapport à la direction F. Selon un mode de réalisation préférentiel, ces plans sont perpendiculaires à la direction F.

L'ensemble de têtes magnétiques TM comporte quatre groupes de têtes magnétiques A, B, C et D. On considère tout d'abord le groupe de têtes A.

Le groupe de têtes A permet d'inscrire des pistes occupant le quart de la largeur de la bande BM. Ce groupe comporte
- un entrefer E0 qui permet d'inscrire sur toute la largeur du quart de la bande ;
- les entrefers E1, E3, E5, E7 permettent de diviser la largeur de la bande en largeurs élémentaires.

La largeur b d'un entrefer, tel que E1, est égale à la largeur b d'une piste élémentaire.
- les entrefers E2 et E6 ont pour longueur deux fois une largeur b d'une piste élémentaire ;
- l'entrefer E4 a pour largeur quatre fois une largeur b d'une piste élémentaire.

On remarque que les entrefers de numéros impairs E1, E3, E5, E7 de largeur élémentaire b sont situés dans les plans de numéros impairs B1 et B7. De plus, si on numérote de P0 à P7, les pistes inscriptibles (ou lisibles) sur la bande BM, ces entrefers E1 à E7 sont affectés aux pistes impaires P1 à P7.

L'entrefer E4 se trouve dans un plan médian B4 par rapport aux plans contenant les entrefers extrêmes E1 et E7 et il occupe la moitié de la largeur de la bande vue par le groupe de têtes A.

Les entrefers E2 et E6 se trouvent dans les plans B2 et B6 situés respectivement entre les deux premiers entrefers de longueur élémentaire E1 et E3 et les deux derniers entrefers E5 et E7.

L'ensemble de ces entrefers permet ainsi d'être commandé selon un mode binaire.

De plus l'avantage d'un tel agencement réside dans le fait que dans le cadre d'une commande matricielle, chaque tête magnétique représentée sur la figure 3a par son entrefer peut être commandée par un premier fil (fil de colonne) contenu dans un plan (B0 à B7) auquel appartient l'entrefer et par un deuxième fil L1, L'1 (fil de ligne) passant par les entrefers du groupe A.

A titre d'exemple, la figure 3b représente un mode de réalisation des pôles relatifs à l'entrefer E3. Ces pôles sont représentés en vue de dessus et sont réalisés selon la technique décrite dans la Demande de Brevet français FR-A-2 630 853 correspondant à EP-A-0 340 085.

Les pôles magnétiques PM1 et PM2 séparés par l'entrefer E3 sont situés de part et d'autre du fil de ligne L1 - L'1 et du fil de colonne C3 - C'3. Une commande coordonnée de ces deux fils permet d'induire à l'écriture des flux magnétiques qui s'additionnent dans la tête magnétique PM1 - E3 - PM2 et ainsi de commander cette tête magnétique.

Selon la technique décrite dans la Demande de Brevet français FR-A-2 630 853, le pôle PM1 peut être utilisé pour la commande de la tête magnétique relative à l'entrefer E2 à l'aide des fils C2 - C'2 et L1 - L'1. De même le pôle PM2 peut être utilisé pour la commande de la tête relative à l'entrefer E4 à l'aide des fils C4 - C'4 et L1 - L'1.

Les groupes de têtes magnétiques B, C, D de la figure 3a sont identiques au groupe de têtes A. Selon la commande matricielle ainsi décrite les têtes magnétiques de ces groupes sont commandées par les mêmes fils de colonnes tels que C2 - C'2, C3 - C'3 etc, ainsi que par les fils de lignes L2 - L'2 pour le groupe B, L3 - L'3 pour le groupe C et L4 - L'4 pour le groupe D.

Selon la commande des fils de colonnes on peut enregistrer (ou lire) sur la bande des largeurs de pistes égales à la longueur élémentaire b mentionnée précédemment ou à un multiple de b.

Sur la figure 4, on a représenté différents types d'enregistrements réalisables avec l'ensemble de têtes magnétiques de la figure 3a.

En utilisant les têtes suivantes, on réalise les enregistrements :
- avec les têtes E0 seules : les enregistrements ENRO, soit 4 pistes larges (largeur 8b)
- avec les têtes E0 et E4 : les enregistrements ENR1, soit 8 pistes adjacentes de largeur 4b
- avec les têtes E0, E2, E4, E6 : les enregistrements ENR2, soit 16 pistes adjacentes de largeur 2b
- avec toutes les têtes magnétiques : les enregistrements ENR3, soit 32 pistes adjacentes de largeur b
- avec toutes les têtes magnétiques sauf l'écriture inhibée dans la moitié de l'ensemble de têtes, par exemple inhibition des fils de ligne L1 - L'1 et L2 - L'2 : enregistrements ENR4, soit 16 pistes sur la moitié de la largeur de la bande.

On se rend compte qu'au cours du processus d'écriture une piste peut être écrite par plusieurs entrefers successivement. Comme la capacité de sur-écriture est bonne, seule compte la dernière inscription, qui efface les précédentes. Ainsi dans l'exemple présenté, lorsque toutes les lignes sont activées, la piste B7 est successivement inscrite par les entrefers E0, E4, E6 et E7.

La lecture d'une bande magnétique enregistrée avec une telle tête magnétique peut être lue par le même type de tête. Elle peut être lue également par une tête de lecture magnétooptique telle que décrite dans la Demande de Brevet français FR-A-2 656 723 mentionnée en début de description.

La lecture doit pouvoir s'adapter à des formats variables. Lorsqu'une lecture magnétooptique est utilisée, un transducteur Kerr continu est au contact de la bande, et chaque piste étroite est analysée par un élément photosensible différent d'une barrette linéaire de photodiodes.

Si l'on se retrouve en situation de lire des pistes plus larges (un multiple entier de la plus petite largeur), il peut être avantageux de tirer parti des informations obtenues par l'ensemble des photodiodes analysant une piste donnée.

Cela est possible en utilisant le système décrit dans la Demande de Brevet français FR-A-2 699 724. Les données issues du CCD sont numérisées en entrée d'une chaîne de traitement. Il est alors possible de moyenner les informations provenant du CCD explorant la même piste. Cela représente une simple sommation, qu'il est intéressant d'effectuer après un filtrage passe haut. Cette opération permet d'améliorer le rapport signal à bruit sur pistes larges, ce qui peut être nécessaire si la bande est moins performante, ou si l'information est analogique.

Ce mode de fonctionnement ne se traduit donc que par une modification de l'électronique de traitement de la voie de lecture.

Un enregistreur utilisant les techniques développées ici a la possibilité de lire et d'écrire différents formats de bande, ce qui est un grand avantage puisque cela assure la compatibilité entre différents produits.

L'invention fournit la base de machines capables d'absorber différents formats de façon transparente à l'utilisateur.
- La réalisation matérielle de la tête matricielle selon l'invention diffère peu des réalisations décrites dans l'art antérieur (FR-A-2 648 940 par exemple). Le seul élément à modifier est le masque définissant la forme des pôles et la largeur des entrefers.
- Le concept peut être simplifié (seulement deux ou trois largeurs de pistes).

La figure 5 représente un ensemble de têtes magnétiques dans lequel on retrouve les groupes de têtes A, B, C, D de la figure 3. En supplément, il est prévu des têtes d'effacement EFF1, EFF2 et une tête de marquage MAR fonctionnant en écriture et en lecture. Sur la figure 5, on a prévu deux têtes d'effacement, mais il aurait été possible de n'en prévoir qu'une seule ou au contraire d'en prévoir plus de deux.

## Revendications

1. Agencement de têtes magnétiques d'enregistrement/lecture comprenant plusieurs paires de pôles disposées sous forme d'un réseau matriciel en lignes et colonnes, les entrefers étant alignés selon les colonnes, les pôles d'une même paire étant séparés par un entrefer d'enregistrement (E0 à E7), caractérisé en ce que les longueurs des entrefers sont différentes selon les paires de pôles, chaque colonne comportant un ensemble d'entrefers de même longueur.

2. Agencement de têtes magnétiques selon la revendication 1, caractérisé en ce que pour l'enregistrement d'informations sur un support d'enregistrement (BM) défilant devant les têtes magnétiques, des premiers entrefers (E1 par exemple) ont une première longueur telle qu'ils permettent d'enregistrer sur une largeur du support et que des deuxièmes entrefers (E2 par exemple) ont une deuxième longueur inférieure à la première longueur et sont situés par rapport aux premiers entrefers de façon à enregistrer dans ladite largeur du support en superposition aux premiers entrefers.

3. Agencement de têtes magnétiques selon la revendication 2, caractérisé en ce que la largeur du support est divisée en largeurs élémentaires (b) égales correspondant à des largeurs de pistes élémentaires chaque entrefer ayant une longueur égale à un multiple entier d'une largeur élémentaire.

4. Agencement de têtes magnétiques selon la revendication 3, caractérisé en ce que certains entrefers ont pour longueur une largeur élémentaire et en ce que d'autres entrefers ont une longueur égale à un multiple pair d'une largeur élémentaire.

5. Agencement de têtes magnétiques selon la revendication 4, caractérisé en ce que pour l'enregistrement/lecture de N pistes élémentaires de largeur b
- N/2 entrefers (E1) ont leur longueur égale à b x (2/2)
- N/4 entrefers (E2) ont leur longueur égale à b x (4/2)
- N/8 entrefers (E3) ont leur longueur égale à b x (8/2)
- ...
- N/N entrefer a sa longueur égale à b x (N/2)
- 1 entrefer (30) a sa longueur égale b x N

6. Agencement de têtes magnétiques selon la revendication 5, caractérisé en ce que les N entrefers sont situés dans N plans (B0, ... B7) sensiblement perpendiculaires à la direction de déplacement (F) du support d'enregistrement (BM) et numérotés de B0 à B (N - 1), les N pistes étant supposées numérotées également de P0 à P (N - 1) et en ce que dans ce cas :
- les entrefers de longueur b (2/2) sont disposés dans les plans de numéros impairs (B1, B3, etc) de façon à écrire/lire sur les pistes de numéros impairs (P1, P3, etc) ;
- les entrefers de longueur b (4/2) b (8/2) etc sont disposés alternativement dans les plans de numéros pairs ;
- l'entrefer de longueur b x N est dans le plan BO.

7. Agencement de têtes magnétiques selon la revendication 6, caractérisé en ce que les différents entrefers ont une de leur extrémité alignée selon une ligne.

8. Agencement de têtes magnétiques selon la revendication 7, caractérisé en ce qu'il comporte plusieurs groupes de têtes magnétiques (A à D) identiques disposés côte à côte, les têtes magnétiques homologues des différents groupes étant dans des mêmes plans (B0 à B7), un fil de commande de colonne traversant les têtes magnétiques d'un même plan et un fil de commande de ligne (L1-L1', L2-L2', L3-L3', L4-L4') traversant les têtes magnétiques d'un groupe de têtes.

9. Agencement de têtes magnétiques selon l'une des revendications précédentes, caractérisé en ce qu'il comporte au moins une tête d'effacement (EFF1, EFF2) commune à un ensemble de têtes.

10. Agencement de têtes magnétiques selon la revendication 9, caractérisé en ce que l'entrefer de la tête d'effacement est dans un plan parallèle aux entrefers de l'ensemble de têtes magnétiques d'écriture/lecture.

11. Agencement de têtes magnétiques selon la revendication 10, caractérisé en ce qu'il comporte une tête de marquage (MAR) d'écriture/lecture dont l'entrefer est dans un autre plan parallèle aux entrefers de l'ensemble de têtes magnétiques d'écriture/lecture.

## Claims

1. Magnetic read/write head arrangement comprising several pairs of poles laid out in the form of a matrix of rows and columns, the head gaps being aligned along the columns, each pair of poles being separated by a write head gap (E0 to E7), characterized in that the lengths of the head gaps are different for each pair of poles, each column comprising a set of head gaps of the same length.

2. Magnetic head arrangement according to Claim 1, characterized in that in order to record information on a recording medium (BM) passing in front of the magnetic heads, the first head gaps (E1 for example) have a first length such that they make it possible to record over a width of the medium and in that second head gaps (E2 for example) have a second length which is less than the first length and are located with respect to the first head gaps so as to record in the said width of the medium, superimposed over the first head gaps.

3. Magnetic head arrangement according to Claim 2, characterized in that the width of the medium is divided into equal elementary widths (b) corresponding to the widths of elementary tracks, each head gap having a length equal to an integer multiple of an elementary width.

4. Magnetic head arrangement according to Claim 3, characterized in that some head gaps have a length equal to an elementary width and in that other head gaps have a length equal to an even multiple of an elementary width.

5. Magnetic head arrangement according to Claim 4, characterized in that in order to read/write N elementary tracks of width b
- N/2 head gaps (E1) have a length equal to b x (2/2)
- N/4 head gaps (E1) have a length equal to b x (4/2)
- N/8 head gaps (E3) have a length equal to b x (8/2)
- ...
- N/N head gap has a length equal to b x (N/2)
- 1 head gap (30) has a length equal to b x N.

6. Magnetic head arrangement according to Claim 5, characterized in that the N head gaps are located in N planes (B0, ... B7) which are virtually perpendicular to the direction of displacement (F) of the recording medium (BM) and numbered from B0 to B (N - 1), the N tracks also being intended to be numbered from P0 to P (N - 1) and in that, in this case:
- the head gaps of length b (2/2) are laid out in odd numbered planes (B1, B3, etc.) so as to read/write on odd numbered tracks (P1, P3, etc.);
- the head gaps of length b (4/2), b (8/2), etc. are alternately laid out in the even numbered planes;
- the head gap of length b x N is in the B0 plane.

7. Magnetic head arrangement according to Claim 6, characterized in that the various head gaps have one of their ends aligned along a row.

8. Magnetic head arrangement according to Claim 7, characterized in that it comprises several groups of identical magnetic heads (A to D) laid out side by side, the equivalent magnetic heads of the various groups being in the same planes (B0 to B7), a column control wire passing through the magnetic heads of the same plane and a row control wire (L1-L1', L2-L2', L3-L3', L4-L4') passing through the magnetic heads of a group of heads.

9. Magnetic head arrangement according to one of the preceding claims, characterized in that it comprises at least one erase head (EFF1, EFF2) common to a set of heads.

10. Magnetic head arrangement according to Claim 9, characterized in that the head gap of the erase head is in a plane parallel to the head gaps of the set of magnetic read/write heads.

11. Magnetic head arrangement according to Claim 10, characterized in that it comprises a read/write marking head (MAR), the head gap of which is in another plane parallel to the head gaps of the set of read/write magnetic heads.

## Patentansprüche

1. Anordnung von magnetischen Schreib/Leseköpfen mit mehreren Paaren von in Form eines Matrixnetzes von Zeilen und Spalten angeordneten Polen, wobei die Magnetspalte gemäß den Spalten ausgerichtet sind und die Pole eines Paares durch einen Aufzeichnungsmagnetspalt (E0 bis E7) voneinander getrennt sind, dadurch gekennzeichnet, daß die Länge der Magnetspalte für die verschiedenen Paare von Polen unterschiedlich sind, und jede Spalte eine Gruppe von Magnetspalten gleicher Länge enthält.

2. Anordnung von Magnetköpfen nach Anspruch 1,
dadurch gekennzeichnet, daß für die Informationsaufzeichnung auf einem Aufzeichnungsträger (BM), der vor den Magnetköpfen vorbeiläuft, erste Magnetspalte (z.B. E1) eine erste Länge besitzen derart, daß sie die Aufzeichnung auf einer Breite des Trägers erlauben, und daß zweite Magnetspalte (z.B. E2) eine zweite Länge größer als die erste Länge besitzen und bezüglich der ersten Magnetspalte so angeordnet sind, daß die Aufzeichnung auf dem Träger in Überlagerung zum ersten Magnetspalt erfolgt.

3. Anordnung von Magnetköpfen nach Anspruch 2,
dadurch gekennzeichnet, daß die Breite des Trägers in Elementarbreiten (b) entsprechend der Breite von Elementarspuren unterteilt ist, wobei jeder Magnetspalt eine Länge gleich einem ganzzahligen Vielfachen einer Elementarbreite besitzt.

4. Anordnung von Magnetköpfen nach Anspruch 3,
dadurch gekennzeichnet, daß bestimmte Magnetspalte eine Länge gleich einem geradzahligen Vielfachen einer Elementarbreite besitzen.

5. Anordnung von Magnetköpfen nach Anspruch 4,
dadurch gekennzeichnet, daß zum Beschreiben/Lesen von N Elementarspuren einer Breite b
- N/2 Magnetspalte (E1) eine Länge von b· (2/2) haben,
- N/4 Magnetspalte (E2) eine Länge von b· (4/2) haben,
- N/8 Magnetspalte (E4) eine Länge von b· (8/2) haben,
- ...
- ein Magnetspalt eine Länge von b· (N/2) hat,
- ein Magnetspalt (E0) eine Länge von B·N hat.

6. Anordnung von Magnetköpfen nach Anspruch 5,
dadurch gekennzeichnet, daß die N Magnetspalte in N Ebenen liegen, die im wesentlichen senkrecht zur Bewegungsrichtung (F) des Aufzeichnungsträgers (BM) verlaufen und mit B0 bis B(N-1) bezeichnet sind, wobei die N Spuren ihrerseits mit P0 bis P(N-1) bezeichnet sind, und daß in diesem Fall
- die Magnetspalte der Länge b· (2/2) in den Ebenen ungerader Nummern (B1, B3, ...) liegen, sodaß die Spuren der ungeradzahligen Nummern (P1, P3, ...) beschrieben bzw. gelesen werden,
- die Magnetspalte der Länge b· (4/2), b· (8/2) ... abwechselnd in den Ebenen mit den geradzahligen Nummern liegen,
- der Magnetspalt der Länge b· N in der Ebene B0 liegt.

7. Anordnung von Magnetköpfen nach Anspruch 6,
dadurch gekennzeichnet, daß die verschiedenen Magnetspalte mit einem ihrer Enden in Zeilenrichtung fluchten.

8. Anordnung von Magnetköpfen nach Anspruch 7,
dadurch gekennzeichnet, daß sie mehrere identische Gruppen (A bis D) von Magnetköpfen besitzt, die nebeneinander liegen, wobei die entsprechenden Magnetköpfen in den verschiedenen Gruppen in denselben Ebenen (B0 bis B7) liegen und ein Spaltensteuerdraht die Magnetköpfe einer Ebene und ein Zeilensteuerdraht (L1-L'1, L2-L'2, L3-L'3, L4-L'4) die Magnetköpfe einer Gruppe von Köpfen durchzieht.

9. Anordnung von Magnetköpfen nach einem der vorstehenden Ansprüche, dadurch gekennzeichnet, daß sie mindestens einen Löschkopf (EFF1, EFF2) für alle Köpfe einer Gesamtheit von Köpfen aufweist.

10. Anordnung von Magnetköpfen nach Anspruch 9,
dadurch gekennzeichnet, daß der Magnetspalt des Löschkopfs sich in einer Ebene parallel zum Magnetspalt der Gesamtheit von magnetischen Schreib/Leseköpfen befindet.

11. Anordnung von Magnetköpfen nach Anspruch 10,
dadurch gekennzeichnet, daß sie einen Schreib/Lese-Markierkopf (MAR) besitzt, dessen Magnetspalt sich in einer anderen Ebene parallel zu den Magnetspalten der Gesamtheit von magnetischen Schreib/Leseköpfen befindet.
